# EUROPEAN PATENT SPECIFICATION

(11) **EP 0 639 905 B1**
(45) Date of publication and mention of the grant of the patent: **23.03.2005**
(21) Application number: 94112494.3
(22) Date of filing: 10.08.1994
(51) Int. Cl.: H04J 14/08, H04J 3/06

(54) **Optical fibre digital communication system with time division multiple access**
Faseroptisches digitales Kommunikationssystem mit Zeitmultiplexmehrfachzugriff
Système de communication par fibre optique et à accès multiple par répartition dans le temps

(30) Priority: 20.08.1993 ES 9301840
(43) Date of publication of application: 22.02.1995
(73) Proprietor: ALCATEL, 75008 Paris (FR)
(72) Inventor: Eldering, Charles A., Willow Grove PA 19090 (US); Neira Armario, Francisco, E-28224 Pozuelo de Alarcon, (Madrid) (ES)
(74) Representative: Lamoureux, Bernard

(56) References cited:
- EP-A- 0 208 021
- WO-A-88/05233
- WO-A-92/22151
- JOURNAL OF LIGHTWAVE TECHNOLOGY, vol.7, no.11, 1 November 1989, NEW YORK US pages 1849 - 1858, XP104020 HIROSHI UNO ET AL. 'Fiber-optic point-to-multipoint interface configuration for broad-band ISDN.'

## Description

### OBJECT OF THE INVENTION

This invention refers to an optical fibre digital communication system that uses the technique of time division multiple access, TDMA, and which comprises an exchange and a set of network terminal equipment connected to it by means of optical fibre links, either directly or else using passive distributors in networks of one or two optical fibres. The network terminal equipment is also connected to a number of subscribers by means of wire cables in order to provide them with communications service.

It is of particular application in optical fibre point to multipoint subscriber distribution systems with flexible allocation of the number of channels per network terminal equipment according to service requirements.

### BACKGROUND TO THE INVENTION

There are various architectures for optical fibre point to multipoint subscriber distribution systems based on TDMA protocols.

A number of them are used in two-fibre networks and make use of time division multiplexing TDM, in which the information is transmitted continuously in the direction from the exchange towards the terminal equipment. Others are employed in single fibre networks and make use of time compression multiplexing TCM, using bidirectional transmission on the same fibre.

This is illustrated in the publication "System Specification and Requirements for Fiber in the Loop Systems", by C.A. Eldering and A. Martin Minguez, PROCEEDINGS OF SPIE OE - FIBERS'92 CONFERENCE, Boston, MA, September 1992, pages 156-165.

In this publication the possibility of using grouped channel or independent channel frame structures is mentioned. In the structures of the first type, each terminal equipment, that is providing service for a certain number of subscribers, groups together the channels that have been allocated to it by the system in order to form an information field to which it adds a preamble, while in the structures of the second type, each subscriber channel forms a single burst consisting of this subscriber's information field plus a preamble.

In figure 3 of the publication mentioned, two frame structures are shown; one for the case of time division multiplexing (TDM/TDMA), and one for the case of time compression multiplexing (TCM/TDMA), the first being for the case of two-fibre networks and the second for single fibre networks. These frames comprise an operation and maintenance channel in both transmission directions for the interchange of control commands between the exchange and the network terminal equipment and payload channels which are channels bearing subscriber's information when they are in communication.

Setting up a frame, however, like those indicated above, requires an initial process that makes allowance for signal propagation delays, so that each network terminal equipment (which will have a different delay) knows when it has to send its channels to the exchange, so that they are correctly situated in the allocated time slot.

This process can be lengthy and delicate and, in addition, has to be repeated whenever there is any change in the system, such as the insertion of new network terminal equipment, replacement of a system component, etc.

WO-A-92 22151 discloses a TPON communication network with multiframe format comprising a control portion including the control word for each outstation, and a traffic portion having a series of traffic frames. Such a multiframe format enables the use of single transducer transceiver in the outstations.

JOURNAL OF LIGHTWAVE TECHNOLOGY, vol. 7, no. 11, 1 November 1989, NEW YORK, US, pages 1849 - 1858, HIROSHI UNO ET AL., "Fibre optic point-to-multipoint interface configuration for broad-band ISDN" discloses a subscriber terminal which uses a technique for transmitting and receiving information over optical fibre. New techniques have a frame phase alignment procedure, b) burst mode automatic optical output power circuit for laser diode, and c) bit timing extraction and dc-wandering cancellation for optical bursty signals.

EP-A-0 208 021 discloses an optical fibre digital communication system with time division multiple access. The system comprises remote stations connected to an exchange, the connection being realised by means of an optical fibre. The fibre carries fixed length frames, which are divided into two halves, first and second half being transmitted from and to the central station, respectively. First and second halves both contain respective information channels fields and contain also information fields for the purpose of burst alignment. Moreover, the first half contains a common channel field.

EP-A-0 208 021 however does not include any teaching as to the clustering of burst alignment fields.

WO-A-88 05233 discloses an optical communication network in which a central station sends a data signal over a single optical fibre to outstations. The data signal is split between several secondary fibres at a first splitter and between further sets of fibres at a second set of splitters. There are individual fibres to customer premises. The data signal are interleaved at the branching points.

### TECHNICAL PROBLEM TO BE OVERCOME

As a consequence of the state of the art described above, the problem is overcome by developing a frame structure that incorporates the ability to perform a frame setting-up process as it has to subsequently behave, that is sufficiently rapid and flexible to permit the insertion of new channels or alteration to the existing system without interrupting the communications in process.

### CHARACTERISATION OF THE INVENTION

The technical problems mentioned above are resolved by the invention by constituting an optical fibre communication system according to claim 1. The system transmits frames of fixed length that comprise at least one common channels field used for the interchange of control information between the exchange and the network terminal equipment of the system, at least one information channels field in which are held the subscriber's information channels that are allocated to the subscribers during the communication process, and at least one burst alignment field in which channels are not usually transmitted, instead it is used for the process of aligning the bursts coming from the network terminal equipment towards the exchange when it is desired to set up a new communication and, consequently, to position the new channel in its allocated time slot.

The system is also characterised in that for networks based on a single optical fibre, and which therefore use time compression multiplexing (TCM), the frame is divided into two halves that correspond to the two transmission directions such that the half used for the direction of transmission from the network terminal equipment towards the exchange comprises a common channels field, an information channels field, and a burst alignment field used in the aligning of the bursts sent by the network terminal equipment towards the exchange inside the previously allocated time slots.

The other half of the frame for the transmission direction from the exchange towards the network terminal equipment also comprises a common channels field and an information channels field the number of which is the same as that of the channels included in the information channels field of the other transmission direction, leaving a free space with a duration equal to that of the burst alignment field in the other transmission direction and which is located alongside it so that, together with it, it is used for the same purpose of alignment of bursts sent from the network terminal equipment towards the exchange.

The system is also characterised in that for networks based on two optical fibres, one for each direction of transmission, the frame transmitted from the exchange towards the network terminal equipment comprises a common channels field and an information channels field, while the frame transmitted from the network terminal equipment towards the exchange comprises a common channels field, an information channels field and a burst alignment field, this frame being shifted in time with respect to that of the other direction of transmission by an interval equal to one half frame.

This allows a change from two fibres to one fibre without altering the transmitting times.

The system according to the invention is also characterised in that each channel of the information channels field comprises a reduced guard field, a reduced synchronisation field and an information field holding the information of a single subscriber, whereby in order to carry extended band services at least two of the previous channels are used, in a consecutive arrangement or not in order to provide service to a single subscriber.

In addition, when a communication is over, the channel that is left free, can be reallocated by the exchange to any subscriber at the request of his network terminal equipment made over a common channel; all this being done without any requirement to rearrange the subscriber channels that are being used in this moment.

### BRIEF FOOTNOTE TO THE FIGURES

A fuller explanation of the invention is given in the following description based on the accompanying figures in which:
- figure 1 employs block diagrams to illustrate the constitution of the system according to the invention, and
- figure 2 shows the structure of the frame transmitted over the optical fibre in the system according to the invention for the case of one optical fibre and two optical fibres.

### DESCRIPTION OF THE INVENTION

The optical fibre digital communication system being considered, is constituted by an exchange unit 1, network terminal equipment 3 that are connected to this exchange 1 by means of optical fibres 4 and also making use of passive distributors 2 when the location of the network terminal equipment so requires it.

Each network terminal equipment 3 is in turn connected to a number of subscribers to whom it provides service by means of time division multiple access which, in like manner, is the technique employed for transmission over the optical fibre.

This system can be based on a single optical fibre or on two fibres, using time compression multiplexing in the first case, and time division multiplexing in the second.

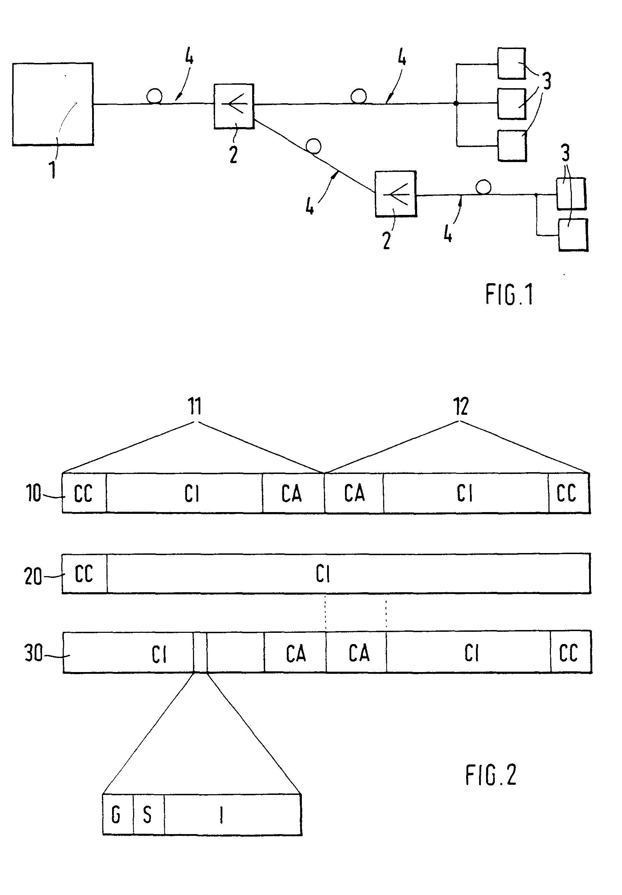

In the first case, the frame is as shown in figure 2 alongside number 10, in which the first half of the frame 11 is used for the direction of transmission from the exchange 1 towards the network terminal equipment 3 and comprises a common channels field CC that is used to send control information from the exchange towards the network terminal equipment 3, an information channels field CI that comprises user channels allocated to the subscribers to effect their communications, and a burst alignment field CA.
The second half of this frame 12, used for the direction of transmission from the network terminal equipment 3 towards the exchange 1, comprises a common channels field CC, equivalent to that in the first half of the frame 11, for carrying control information from the network terminal equipment 3 towards the exchange 1, an information channels field CI with user channels and a burst alignment field CA located beside the corresponding burst alignment field CA of the first half of the frame 11, such that the assembly of the two burst alignment fields CA is used in the process of locating the bursts coming from the network terminal equipment 3 towards the exchange 1 in the allocated time slots without interfering with the channels in service.

For the case of networks with two optical fibres, each one of these transmits the frame corresponding to one direction of transmission. This is also shown in figure 2, where frame 20 is the one transmitted by the exchange 1 towards the network terminal equipment 3 over one of the two optical fibres, while frame 30 is that transmitted by the group of network terminal equipment 3 towards the exchange 1.

The frame 20 sent from the exchange 1, or downstream frame, comprises the common channels field CC and the information channels field CI, there being no need for the burst alignment field as it is not used. In the opposite direction, frame 30 sent from the group of network terminal equipment 3, or upstream frame, holds all the fields mentioned, i.e. common channels field CC, information channels field CI separated into two parts by a burst alignment field CA, which is actually a double field formed by two identical fields situated one after the other. The burst alignment fields CA are positioned in the centre of the upstream frame 30.

In addition, the upstream frame 30 is shifted by one half frame length with respect to the downstream frame 20, whereby, for example, the first information channel situated in the information channels field CI just after the common channels field CC of the downstream frame 20, has its duplex channel transmitted in the reverse time slot corresponding to the information channels field CI, just in the first position after the burst alignment field CA of the upstream frame 30.

This permits changing from two fibres to only one fibre instantaneously, transmitting over only one of the two fibres the first half of the downstream frame 20 and the second half of the upstream frame 30 and, suppressing in the downstream frame 20 the channels that would overlap with the burst alignment field CA situated on the left.

In this way, each channel held in the information channels field CI with the direction of transmission from the exchange 1 towards the network terminal equipment 3, would have its partner for the opposite direction and a frame 10 would be formed for a single fibre with time compression multiplexing with no change in the equipment.

The information channels of the information field CI are channels formed by an information field I that holds the information of a single user to which is added a reduced synchronisation field S and a reduced guard field G to permit slight time shifts for the channels. The control information is sent over the common channels and not in the header of these channels.

By using only one burst or information channel per user, also known as independent channels, it is possible to have dynamic and flexible allocation of the free channels for which the burst alignment field CA is necessary so that these allocations can be done without any need to interrupt the communications in course, or to rearrange them for more efficient use of the channels.

The system according to the invention, and thanks to its independent channel allocation, permits the provision of extended band services by grouping together at least two independent channels and allocating them to a single subscriber in order to offer a higher bit rate, there being no obligation to have the grouped channels for providing the extended band service located consecutively in the frame. In both cases, the subscriber or subscribers would receive a burst of greater duration without intervening guard or synchronisation spaces that would be assembled and disassembled by the network terminal equipment in question.

## Claims

1. **OPTICAL FIBRE DIGITAL COMMUNICATION SYSTEM WITH TIME DIVISION MULTIPLE ACCESS** comprising an optical fibre network (4), an exchange and at least a network terminal equipment (3) connected by wire cables to a number of subscribers, a plurarity of network terminal equipment (3) being connected to the exchange (1) by the optical fibre network (4), the optical fibre network (4) comprising at least a first optical fibre being adapted to carry fixed length frames in both transmission directions, each frame being divided into a first half and a second half, the first and second halves being tansmitted from and to said exchange (1), respectively; the first and the second halves both containing respectively an information channels field (CI) and a bursts alignment field (CA); **characterised in that** each transmitted frame comprises a common channels field (CC) succeeded by the information channels field (CI) which precedes the corresponding bursts alignment field (CA) of the first half followed by the corresponding bursts alignment field (CA) succeeded by the information channels field (CI) and the common channels field (CC) of the second half, thereby clustering the bursts alignment fields (CA) for aligning bursts transmitted by each network terminal equipment (3) within an assigned information channels field (CI) in the reverse direction. '

2. **COMMUNICATION SYSTEM** according to claim 1, **characterised in that** the first optical fibre is also adapted to transmit a first further frame (20) containing the common channels field (CC) followed by a corresponding information channels field (Cl) in the forward direction, and **in that** the optical fibre network (4) further comprises a second optical fibre which is adapted to transmit a second further frame (30) containing a first portion of the information channels field (CI) followed a clustered bursts alignment field (CA) succeeded by a second portion of the information channels field (CI), and following by the corresponding common channels field (CC) in the reverse direction, respectively, the second further frame (30) being transmitted with a delay equal to half a frame with respect to the first further frame (20) or vice versa.

3. **COMMUNICATION SYSTEM** according to claim 2, **characterised in that** the network based on two optical fibres (4) is adapted to transmit over one of the two optical fibres (4) a half of the first further frame (20) comprising said common channels field (CC) and a part of the information channels field (Cl), followed by a half of the second further frame (30) comprising one part of the information channels field (CI) and a single burst alignment field (CA), from the exchange (1) to the network terminal equipment (3) and vice versa.

4. **COMMUNICATION SYSTEM** according to claim 1, **characterised in that** each channel contained in the information channels field (CI) comprises a guard field (G), a synchronisation field (S), and an information field (I), corresponding to one subscriber, the guard field (G) and the synchronisation field being shorter in duration than the information field (I).

5. **COMMUNICATION SYSTEM** according to claim 1, **characterised in that** the system is adapted for clustering at least two channels adjoining in the information channels field (CI) for providing at least a broadband service.

6. COMMUNICATION SYSTEM according to claim 5, **characterised in that** the system is adapted for clustering at least two channels non-adjoining in the information channels field (CI) for supplying the broadband service.

## Patentansprüche

1. **FASEROPTISCHES DIGITALES KOMMUNIKATIONSSYSTEM MIT ZEITMULTIPLEXMEHRFACHZUGRIFF,** das ein faseroptisches Netzwerk (4) enthält, eine Vermittlung und mindestens eine Netzwerk-Endeinrichtung (3), die per Drahtkabel mit einer Anzahl von Teilnehmern verbunden ist, eine Vielzahl von Netzwerk-Endeinrichtungen (3), die mit der Vermittlung (1) über das faseroptische Netzwerk (4) verbunden sind, wobei das faseroptische Netzwerk (4) mindestens eine erste optische Faser enthält, die so angepasst ist, dass sie Rahmen fester Länge in beide Übertragungsrichtungen überträgt und wobei jeder Rahmen in eine erste Hälfte und eine zweite Hälfte unterteilt ist, wobei die erste Hälfte und die zweite Hälfte von, bzw. zu der Vermittlung (1) übertragen wird; wobei die erste Hälfte und die zweite Hälfte beide jeweils ein Informationskanal-Feld (CI) und ein Burst-Justierungs-Feld (CA) enthalten; **dadurch gekennzeichnet, dass** jeder übertragene Rahmen ein Feld für gemeinsame Kanäle (CC) enthält, auf das das Informationskanal-Feld (CI) folgt, welches dem entsprechenden Burst-Justierungs-Feld (CA) der ersten Hälfte vorangeht, gefolgt von dem entsprechenden Burst-Justierungs-Feld (CA), auf welches das Informationskanal-Feld (CI) und das Feld für den gemeinsamen Kanal (CC) der zweiten Hälfte folgt, wodurch die Burst-Justierungs-Felder (CA) gruppiert werden, um von jeder Netzwerk-Endeinrichtung (3) gesendete Bursts innerhalb eines zugeordneten Informationskanal-Feldes (CI) in Gegenrichtung zu justieren.

2. **KOMMUNIKATIONSSYSTEM** gemäß Anspruch 1, **dadurch gekennzeichnet, dass** die erste optische Faser auch so angepasst ist, dass sie einen ersten weiteren Rahmen (20) überträgt, der das Feld für gemeinsame Kanäle (CC) enthält, auf das ein entsprechendes Informationskanal-Feld (CI) in Vorwärtsrichtung folgt, und dadurch, dass das faseroptische Netzwerk (4) weiterhin eine zweite optische Faser enthält, die so angepasst ist, dass sie einen zweiten weiteren Rahmen (30) überträgt, der einen ersten Teil des Informationskanal-Feldes (CI) enthält, auf den ein gruppiertes Burst-Justierungs-Feld (CA) folgt, auf welches ein zweiter Teil des Informatinskanal-Feldes (CI) folgt, und auf welches das entsprechende Feld für gemeinsame Kanäle (CC) in Rückwärtsrichtung folgt, wobei der zweite weitere Rahmen (30) bezogen auf den ersten weiteren Rahmen (20), oder umgekehrt, mit einer Verzögerung übertragen wird, die gleich einem halben Rahmen ist.

3. **KOMMUNIKATIONSSYSTEM** gemäß Anspruch 2, **dadurch gekennzeichnet, dass** das auf zwei optischen Fasern (4) basierende Netzwerk so angepasst ist, dass es von der Vermittlung (1) zur Netzwerk-Endeinrichtung (3) und umgekehrt über eine der beiden optischen Fasern (4) eine Hälfte des ersten weiteren Rahmens (20) überträgt, der das Feld für gemeinsame Kanäle (CC) und einen Teil des Informationskanal-Feldes (CI) enthält, auf das eine Hälfte des zweiten weiteren Rahmens (30) folgt, die einen Teil des Informationskanal-Feldes (CI) und ein einzelnes Burst-Justierungs-Feld (CA) enthält.

4. **KOMMUNIKATIONSSYSTEM** gemäß Anspruch 1, **dadurch gekennzeichnet, dass** jeder in dem Informationskanal-Feld (CI) enthaltene Kanal ein Sicherheits-Feld (G), ein Synchronisations-Feld (S) und ein Informations-Feld (I) enthält, die einem Teilnehmer entsprechen, wobei das Sicherheits-Feld (G) und das Synchronisations-Feld von kürzerer Dauer sind als das Informations-Feld (I).

5. **KOMMUNIKATIONSSYSTEM** gemäß Anspruch 1, **dadurch gekennzeichnet, dass** das System so angepasst ist, mindestens zwei in dem Informationskanal-Feld (CI) aufeinander folgende Kanäle zu gruppieren, um mindestens einen Breitbanddienst anzubieten.

6. **KOMMUNIKATIONSSYSTEM** gemäß Anspruch 5, **dadurch gekennzeichnet, dass** das System so angepasst ist, mindestens zwei in dem Informationskanal-Feld (CI) nicht aufeinander folgende Kanäle zu gruppieren, um den Breitbanddienst anzubieten.

## Revendications

1. Système de communication numérique par fibre optique et à accès multiple par répartition dans le temps, comprenant un réseau de fibres optiques (4), un central et au moins un équipement de terminal de réseau (3) connecté par des câbles métalliques à un certain nombre d'abonnés, une pluralité d'équipements de terminal de réseau (3) étant connectés au central (1) par le réseau de fibres optiques (4), le réseau de fibres optiques (4) comprenant au moins une première fibre optique adaptée pour transporter des trames de longueur fixe dans les deux directions de transmission, chaque trame étant divisée en une première et une deuxième moitiés, la première et la deuxième moitiés étant transmises à partir de et vers ledit central (1), respectivement; les première et deuxième moitiés contenant toutes les deux respectivement un champ de canaux d'information (CI) et un champ d'alignement de salves (CA), **caractérisé en ce que** chaque trame transmise comprend un champ de canaux communs (CC) suivi par le champ de canaux d'information (Cl) qui précède le champ d'alignement de salves (CA) correspondant de la première moitié, suivi par le champ d'alignement de salves (CA) correspondant suivi par le champ de canaux d'information (Cl) et par le champ de canaux communs (CC) de la deuxième moitié, groupant ainsi les champs d'alignement de salves (CA) pour aligner les salves transmises par chaque équipement de terminal de réseau (3) à l'intérieur d'un champ de canaux d'information attribué (CI) dans la direction inverse.

2. Système de communication selon la revendication 1, **caractérisé en ce que** la première fibre optique est également adaptée pour transmettre une première trame supplémentaire (20) contenant le champ de canaux communs (CC) suivi par un champ de canaux d'information (Cl) correspondant dans la direction directe, et **en ce que** le réseau de fibres optiques (4) comprend en outre une deuxième fibre optique adaptée pour transmettre une deuxième trame supplémentaire (30) contenant une première partie du champ de canaux d'information (CI) suivie par un champ d'alignement de salves (CA) groupé, suivi par une deuxième partie du champ de canaux d'information (CI) et suivi par le champ de canaux communs (CC) correspondant dans la direction inverse, respectivement, la deuxième trame supplémentaire (30) étant transmise avec un retard égal à une demi trame par rapport à la première trame supplémentaire (20), ou vice versa.

3. Système de communication selon la revendication 2, **caractérisé en ce que** le réseau basé sur deux fibres optiques (4) est adapté pour transmettre sur une des deux fibres optiques (4) une moitié de la première trame supplémentaire (20) comprenant ledit champ de canaux communs (CC) et une partie du champ de canaux d'information (CI), suivie par une moitié de la deuxième trame supplémentaire (30) comprenant une partie du champ de canaux d'information (CI) et un seul champ d'alignement de salves (CA), à partir du central (1) vers l'équipement de terminal de réseau (3), et vice versa.

4. Système de communication selon la revendication 1, **caractérisé en ce que** chaque canal contenu dans le champ de canaux d'information (CI) comprend un champ de garde (G), un champ de synchronisation (S) et un champ d'information (I), correspondant à un abonné, la durée du champ de garde (G) et du champ de synchronisation étant plus courte que celle du champ d'information (I).

5. Système de communication selon la revendication 1, **caractérisé en ce que** le système est adapté pour grouper au moins deux canaux voisins dans le champ de canaux d'information (CI) dans le but de fournir au moins un service à large bande.

6. Système de communication selon la revendication 5, **caractérisé en ce que** le système est adapté pour grouper au moins deux canaux non voisins dans le champ de canaux d'information (CI) pour fournir le service à large bande.
